# EUROPEAN PATENT SPECIFICATION

(11) **EP 0 370 655 B1**
(45) Date of publication and mention of the grant of the patent: **22.02.1995**
(21) Application number: 89311500.6
(22) Date of filing: 07.11.1989
(51) Int. Cl.: G11B 7/09, G11B 7/12, G11B 7/125, G11B 7/13

(54) **Optical pick-up devices**
Optische Abtastvorrichtungen
Têtes optiques

(30) Priority: 22.11.1988 JP 295679/88
(43) Date of publication of application: 30.05.1990
(73) Proprietor: SONY CORPORATION, Tokyo 141 (JP)
(72) Inventor: Kume, Hidehiro Patents Division, Tokyo 141 (JP); Yamamoto, Etsufumi Patents Division, Tokyo 141 (JP); Matsumoto, Yoshiyuki Patents Division, Tokyo 141 (JP)
(74) Representative: Thomas, Christopher Hugo

(56) References cited:
- EP-A- 0 070 552
- EP-A- 0 258 450
- EP-A- 0 367 465
- FR-A- 2 601 173
- GB-A- 2 196 115

## Description

This invention relates to optical pick-up devices for a recording and/or reproducing apparatus for an optical disc.

In a known optical pick-up device comprising a semiconductor laser element as a light source, a light beam emitted by the laser element is converged on a signal recording surface of an optical disc by a suitable optical system to record and/or read data signals on or from the signal recording surface.

This type of optical pick-up device is provided with a photosensor, such as a photodiode, for detecting the light beam reflected from the signal recording surface. Based on the photosensor output, read-out signals of the data signals, focusing error signals and tracking error signals are formed. Based on these error signals, focusing servo and tracking servo control operations are performed, such that, even if the optical disc is eccentric or deviates from true planarity during its rotation, the light beam projected on the signal recording surface may be converged correctly on a recording track formed on the signal recording surface.

In such an optical pick-up device, it has been proposed to reduce the focal length of the optical device which converges the light beam on the signal recording surface, such as an objective lens, to shorten the distance between the laser element and the signal recording surface, and thereby reduce the size of the pick-up device.

However, in this case so-called return light to the laser element increases. The return light is the light beam fraction which is reflected by the signal recording surface of the disc and returned to the laser element. In general, an increase in the return light results in increase in the light intensity noise, which in turn gives rise to various problems, such as fluctuations in the light emitting power. Hence, it may occasionally become impossible to perform correct write and/or read operations for data signals.

A so-called gain waveguide type laser element is suitable for use as the semiconductor laser element of a reduced-size optical pick-up device. The laser element may be classified as a refractive index waveguide type element oscillating in a single mode, or a gain waveguide type element oscillating in a multiple mode. A gain waveguide type laser element is subject to noise due to return light to a lesser extent than the refractive index waveguide type element, and hence may advantageously be used as the laser element.

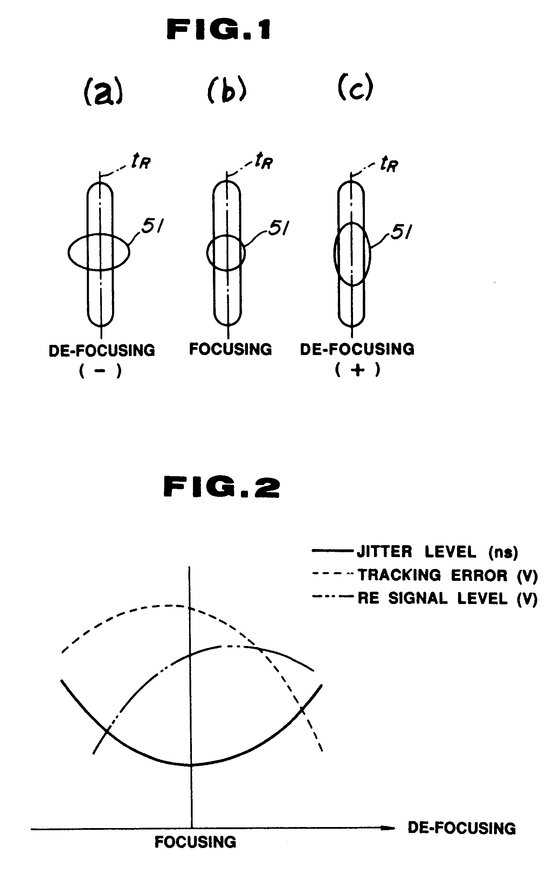

However, a gain waveguide type laser element exhibits a larger astigmatism than a refractive index waveguide type laser element. The light beam emitted by the laser element is subject to astigmatism due to the astigmatic difference inherent in the laser element. For this reason, the beam spot formed on the signal recording surface is not truly circular as shown in Figure 1(b), but assumes the shape of ellipses having their long axes extending in mutually perpendicular directions, depending on the de-focusing directions, as shown in Figures 1(a) and 1(c).

If the contour of the beam spot 51 is changed as shown in Figures 1(a) and 1(c), as a result of de-focusing, the surface measure of the beam spot 51 on a recording track t_{R} being thus changed, the minimum tracking error signal level position and the maximum RF signal level position are not coincident with each other, or with the focusing position at which jitter of read or written data signals becomes least, as shown in Figure 2, so that non-symmetries of the tracking error signal level and of the RF signal level are caused with respect to the focusing position. As a result of these non-symmetries, it may occasionally become impossible to effect focusing or tracking servo operations on occurrence of de-focusing, due to eccentricity or deviation from planarity of the optical disc.

In an optical pick-up device employing a gain waveguide type laser element, such astigmatism is corrected by a plane parallel glass which is inclined at a predetermined angle with respect to the optical axis of the light beam, and which is placed on a light path along which the light beam is dispersed or converged. This aberration correction plate is provided, for example, between the laser element and a beam splitter which transmits the light beam reflected by the signal recording surface towards the photosensors.

In the above described optical pick-up device, it has been proposed to provide a light emitting/receiving composite unit to reduce the size of the device further. This composite unit is formed by the laser element and split detectors on a unitary semiconductor substrate, these detectors functioning as the photosensors. On the semiconductor substrate, there is provided a beam splitter prism whereby the light beam emitted by the laser element is caused to exit the substrate at a predetermined angle with respect to the substrate so as to be projected on the signal recording surface of the optical disc, the light beam reflected by the signal recording surface being received by the split detectors.

For reducing the size of the pick-up device, these detectors in the composite unit are composed of first to third juxtaposed light receiving elements each having a rectangular light receiving surface. The state of the light beam received by these detectors, for example, the state of energy distribution on a cross-sectional surface of the flux of the light beam, is changed as a function of the relative position between a beam spot formed by the convergence of the light beam from the laser element on the signal recording surface and the recording track on the signal recording surface. The tracking error signals are formed by comparing the outputs of the first and third light receiving elements provided on each side of the photodetectors. On the other hand, the focusing error signals are formed by comparing the output of the second light receiving elements at the central portions of the photodetectors with the outputs of the second and third light receiving elements.

However, it is not possible with an optical pick-up device employing a light emitting/receiving composite unit formed by the detectors to compensate for the above-described non-symmetries or the tracking error signal with respect to the focusing position, even with the use of the aberration correcting plate formed by a plane parallel glass inclined at a predetermined angle with respect to the optical axis of the light beam.

Thus, when forming the tracking error signal in the split detectors, the second light receiving element at the centre of the detectors proves to be an insensitive zone. Consequently, the portion of the light beam which is in the vicinity of the optical axis of the light beam cannot be received by the detectors. As regards abberation correction by the aberration correction plate, although astigmatism can be compensated by the plate, coma aberration is likely to occur as a result of compensation for astigmatism. The effect of coma aberration becomes more pronounced in a region further away from the optical axis of the light beam. Hence, the effect of coma aberration on the output signal becomes larger in the photodetector having an insensitive central zone, such as the above-described split detectors, thus giving rise more readily to non-symmetries of the tracking error signal with respect to the focusing position.

It is also difficult with the optical pick-up device employing the aberration correction plate to reduce the size of the pick-up device because of the space required for the plate.

Both US Patent No. US-A-4 767 921 (which corresponds to French Patent Application Publication No. FR-A-2 601 173) and European Patent Application Publication No. EP-A-0 367 465 (which forms part of the state of the art by virtue only of EPC Article 54(3)) describe an optical pick-up device substantially in accordance with the pre-characterising part of claim 1.

According to the present invention there is provided an optical pick-up device for a recording and/or reproducing apparatus for an optical disc wherein:
a light beam emitted by a semiconductor laser element is converged by an objective lens so as to be irradiated on said optical disc having a plurality of tracks on which data signals are previously recorded, the reflected light from said optical disc being detected for reading and/or recording the data signals;
the optical pick-up device comprises photodetector means arranged to receive said reflected light to produce tracking error signals; and
said semiconductor laser element is provided in such a manner that said light beam is projected on said disc so that the meridional plane of said light beam extending orthogonal to the junction plane of semiconductor layers of the semiconductor laser element is at such an angle with respect to a tangential line drawn to the recording tracks that non-symmetries on both sides of said tangential line as a function of the de-focusing direction of the beam spot on said disc are compensated;
characterised in that said photodetector means has a central inoperative zone having a width which is 10 to 40% of the radius of said light beam incident on said photodetector means.

According to embodiments of the invention described in detail below, the light beam emitted by the laser element is projected on an optical disc on which circumferentially extending recording tracks are formed, and the light reflected by the disc is detected to read and/or record data signals. The photodetector means for sensing the reflected light to generate tracking error signals comprises at least one photosensor having a central insensitive zone. The laser element is so arranged that the light beam is projected on the optical disc so that the meridional plane of the light beam orthogonal to the junction plane of semiconductor layers of the laser element is at such an angle with respect to a tangential line drawn to one of the recording tracks of the optical disc that non-symmetries on both sides of said tangential line as a function of the de-focusing direction of the beam spot on the disc may be compensated. Also the light beam is free from coma aberration, so that, in cases wherein the light beam emitted by the laser element is subject to astigmatism, the reflected light from the recording track does not differ in intensity depending on the de-focusing direction, despite the fact that each of the photodetectors for producing the tracking error signal has the inoperative central zone.

The invention will now be described by way of example with reference to the accompanying drawings, wherein like parts are referred to by like references, and in which:
Figure 1 is a diagrammatic view showing the contour of a beam spot formed on an optical disc by a known optical pick-up device;
Figure 2 is a chart showing characteristics of a known optical pick-up device;
Figure 3 is a perspective view of an embodiment of optical pick-up device according to the present invention;
Figure 4 is a perspective view of a light emitting/receiving composite unit of the device of Figure 3;
Figure 5A is a diagrammatic view of detectors of the composite unit and a circuit for processing output signals from the detectors;
Figure 5B is a diagrammatic view of modified detectors of the composite unit;
Figure 6 is a diagrammatic view showing the contour of a light beam formed on an optical disc by the device of Figure 3;
Figure 7 is a chart showing characteristics of the device of Figure 3;
Figure 8 is a perspective view of a modified embodiment of optical pick-up device according to the present invention;
Figure 9 is a longitudinal sectional view of parts of the device of Figure 8; and
Figure 10 is a plan view of a modified mounting of the light emitting/receiving element of the device of Figure 8.

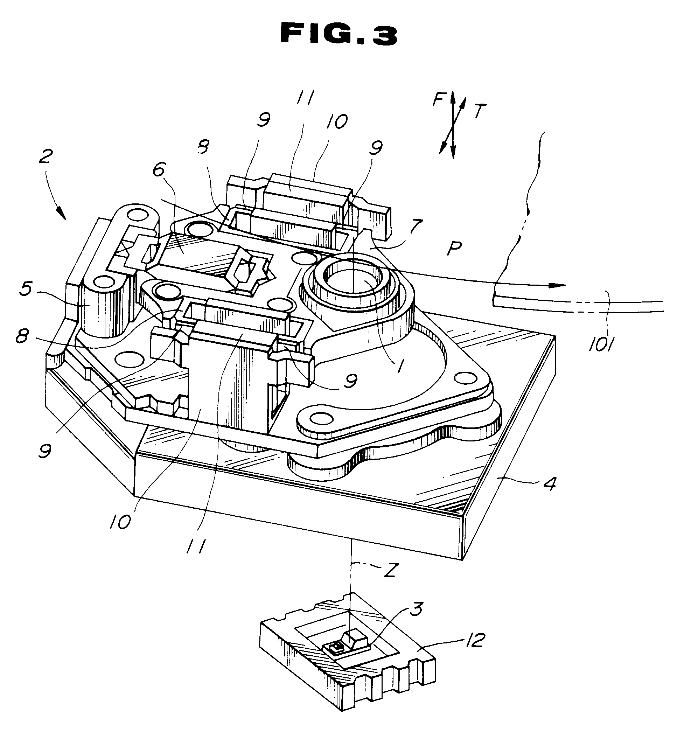

Referring to Figure 3, an optical pick-up device according to the present invention includes an objective lens driving unit 2 for driving an objective lens 1 for converging a light beam projected on an optical disc 101 on the signal recording surface of the disc 101 in two directions, that is, in a direction parallel to the optical axis of the objective lens 1 and in a direction lying within a plane orthogonal to the optical axis, and a light emitting/receiving composite unit 3 formed by a semiconductor laser element and a light receiving element.

The driving unit 2 includes a lens bobbin 7 supported on a support 5 provided upright on a supporting base plate 4 so that the lens bobbin 7 can be moved in the above two directions by a movable supporting arm member 6. The arm member 6 is formed of a resilient material, such as synthetic resin, and includes first and second hinges 6a and 6b which are of reduced thicknesses and may be displaced in mutually perpendicular directions.

On the lens bobbin 7 are mounted the objective lens 1, a pair of focusing coils 8 and two pairs of tracking coils 9. Magnets 11, 11 are mounted on a pair of yokes 10, 10 mounted upright on the base plate 4. The paired magnets 11, 11 are mounted for facing the focusing coils 8 and the tracking coils 9. The coils 8, 9, the yokes 10 and the magnets 11 make up a magnetic circuit. That is, when a focusing drive current based on focusing error signals is supplied to the focusing coils 8, the lens bobbin 7 is driven along the optical axis of the objective lens 1, that is, along the so-called focusing direction, as shown by an arrow F in Figure 3. Also, when a tracking driving current based on the tracking error signal is supplied to the tracking coils 9, the lens bobbin 7 is driven along a direction included within the optical axis of the objective lens 1, in a so-called tracking direction, as indicated by an arrow T in Figure 3.

The driving unit 2 is mounted with the objective lens 1 facing the disc 101. At this time, the optical axis of the objective lens 1 is approximately normal to the disc 101, while the tracking direction is approximately normal to the tangential direction of a circumferential recording track t_{R}, as indicated by an arrow P in Figure 3.

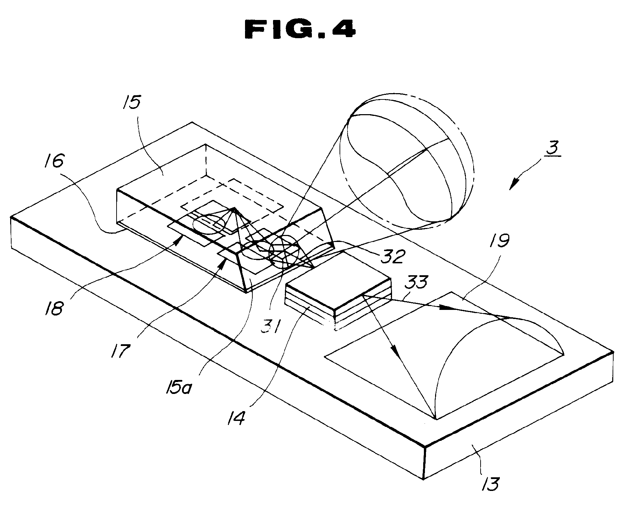

The composite unit 3 is mounted within a package 12 and, as shown in Figure 4, comprises a semiconductor substrate 13. On the substrate 13 is formed the semiconductor laser element 14 formed by a lamination of a plurality of semiconductor layers, inclusive of the substrate 13. The laser element 14 is a so-called gain waveguide type performing a multi-mode oscillation and is affected by noise due to the return light beam from the disc 101.

The laser element 14 exhibits so-called astigmatic difference so that the light beam 31 is astigmatic. That is, the apparent light emitting position within the meridional plane of the light beam 31, that is the plane perpendicular to the junction surfaces of the semiconductor layers making up the laser element 14 and including the optical axis, is at the end face position of the laser element 14, whereas the apparent light emitting position within the sagittal plane of the light beam 31, that is, the plane parallel to the aforementioned junction surface and inclusive of the optical axis, is at a position recessed from the end face by about 20 to 30 »m into the interior of the laser element 14. Consequently, the equiphase wave surface of this light beam is bent most prominently within the meridional plane, with the curvature becoming least within the sagittal plane.

In a direction along which one light beam B₁ is emitted from the laser element 14, there is secured a beam splitter prism 15 on the substrate 13, such as with an adhesive, for facing the laser element 14. The prism 15 has its side facing the laser element 14 inclined by a predetermined angle with respect to the optical axis 32 of the light beam 31 from the laser element 14 and coated by a transmitting/reflecting film 15a. That is, the light beam 31, B₁ is partially reflected by the film 15a so as to exit the substrate 13 at a predetermined angle.

On the substrate 13 and at an area where the prism 15 is provided, there are formed first and second split detectors 17 and 18, that is, light receiving units, each composed of first to third light receiving elements.

In a direction along which another light beam 33 is emitted from the laser element 14, there is formed a monitoring detector 19 on the substrate 13 for receiving the other light beam 33. The monitoring detector 19 functions to detect the intensity of the light beam emitted by the laser element 14 to control the light emitting power of the laser element 14 on the basis of the detected light intensity and with use of an automatic power control circuit (not shown).

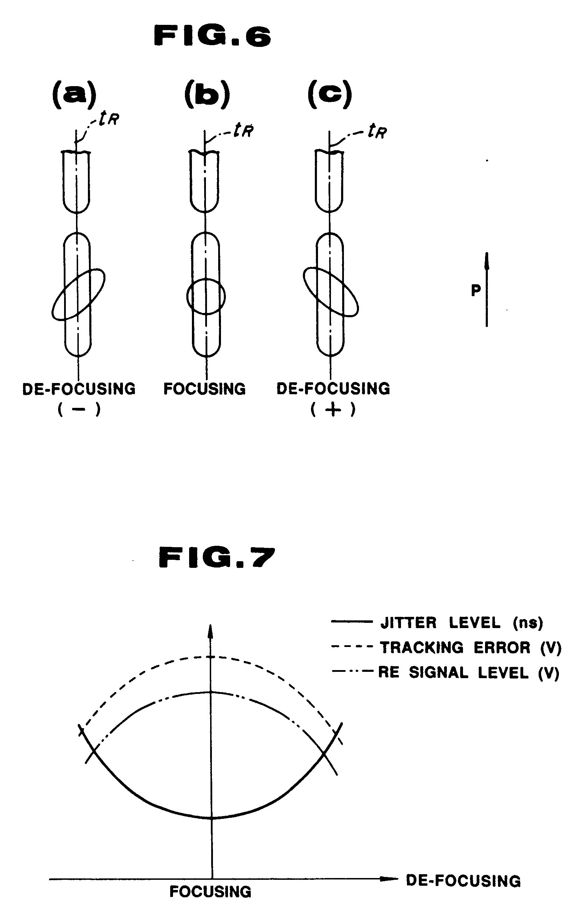

The light beam 31 from the composite unit 3 is incident on the objective lens 1, as shown in Figure 3, so as to be projected on the signal recording surface of the disc 101. The composite unit 3 is positioned so that the meridional plane of the light beam is at an angle of approximately 45° with respect to the tangential direction of the recording track t_{R} indicated by the arrow P in Figure 3. In the case of correct focusing, the beam spot 34 formed on the signal recording surface of the disc 101 is truly circular in contour, as shown in Figure 6(b). However, should a so-called de-focusing occur, the beam spot formed on the signal recording surface assumes the shape of ellipses having their long axes inclined by about 45° with respect to the recording track t_{R}, as indicated in Figures 6(a) and 6(c).

The light beam 31 projected on the signal recording surface is reflected by this surface before again reaching the transmitting/reflecting film 15a by way of the objective lens 1. The light beam thus again reaching the film 15a is transmitted through the film 15a to proceed into the prism 15 before being received by the first and the second split detectors 17 and 18 via a prescribed light path.

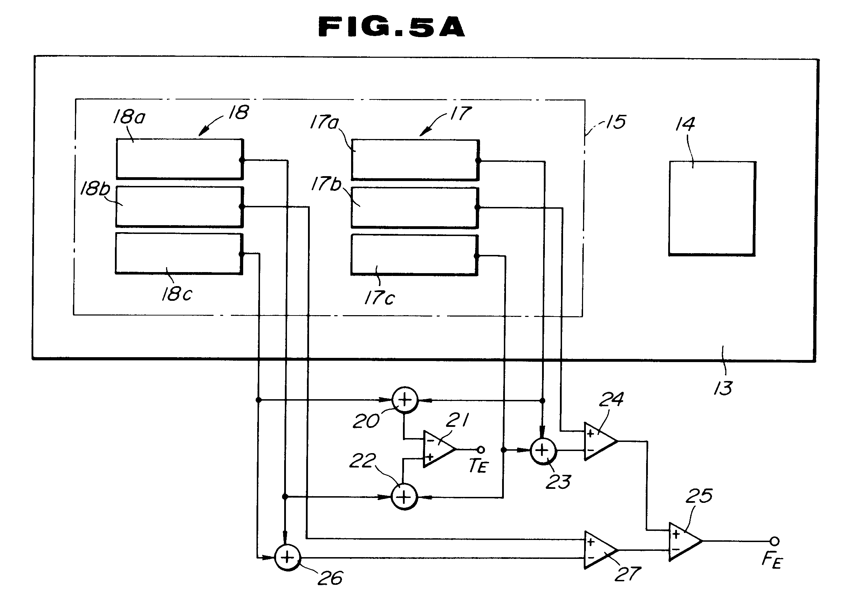

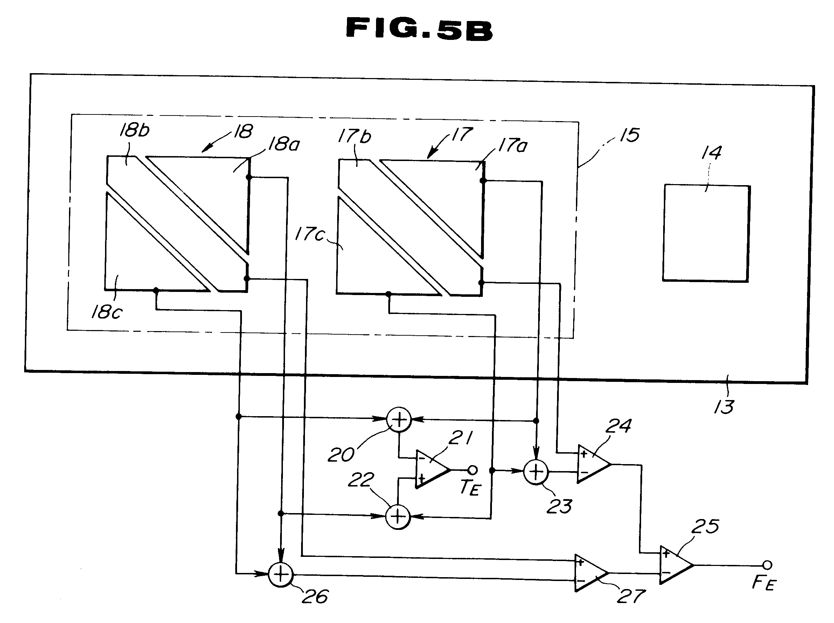

As shown in Figures 5A and 5B, the detectors 17 and 18 are split into first to third light receiving elements 17a, 17b, 17c: 18a, 18b, 18c having their light receiving surface lying parallel to one another.

In the example shown in Figure 5A, the light receiving elements of the detectors 17 and 18 are arrayed parallel to the meridional plane of the light beam, whereas, in the example shown in Figure 5B, the light receiving elements of the detectors 17 and 18 are arrayed parallel to the line tangential to the recording tracks t_{R}.

A tracking error signal T_{E} is formed by a so-called push-pull method and on the basis of output signals of the first and third light receiving elements 17a, 17b, 18a and 18c on the respective lateral sides of the detectors 17 and 18. That is, the output of the first light receiving element 17a on one lateral side of the first detector 17 and the output of the third light receiving element 18c on the other lateral side of the second detector 18 are combined by a first adder 20, before being supplied to a non-inverting input terminal of the first subtractor 21. The output of the third light receiving element 17c on the other lateral side of the first detector 17 and the output of the first light receiving element 18a on the one lateral side of the second detector 18 are combined by a second adder 22 before being supplied to a non-inverting terminal of the first subtractor 21. The output of this first subtractor 21 represents the tracking error signal T_{E}.

That is, in producing the tracking error signal T_{E}, the second light receiving elements 17b and 18b forming the central portions of the detectors 17 and 18 represent dead zones, or insensitive zones. The width of each of the second light receiving elements 17b and 18b as these dead zones accounts for about 10 to 40% of the radius of the light beam incident on the detectors 17 and 18.

On the other hand, the outputs of the first light receiving element 17a and the third light receiving element 17c of the first detector 17 are combined by a third adder 23 before being supplied to a non-inverting input terminal of a second subtractor 24. This non-inverting input terminal is supplied with an output of the second light receiving element 17b of the first detector 17. The output signal of the second subtractor 24 is supplied to a non-inverting input terminal of a third subtractor 25.

The outputs of the first light receiving element 18a and the third light receiving element 18c of the second detector 18 are combined by a fourth adder 26 before being transmitted to a non-inverting input terminal of a fourth subtractor 27. To this non-inverting input terminal is supplied the output of the second light receiving element 18b of the second split detector 18. The output signal of this fourth subtractor 27 is transmitted to an inverting input terminal of the third subtractor 25. The output signal of this third subtractor 25 represents a focusing error signal F_{E}.

The sum of the output signals of the detectors 17 and 18 represents the data read-out signal (RF signal).

In the above described optical pick-up device, should so-called de-focusing occur, as shown in Figure 6, no difference in the beam spot surface measure on the recording track t_{R} is caused in the directions in which the de-focusing has occurred. For this reason, with the focusing position being the position at which jitter in the data signals read from or written on the disc 101 becomes least, this focusing position is coincident with the position at which the level of the tracking error signal T_{E} and that of the RF signal become a maximum, as shown in Figure 7. That is to say, the symmetrical relation of the signal levels of the RF signal and the tracking error signal T_{E} with respect to the focusing position is maintained.

In as much as the symmetry of the level of the RF signal and the tracking error signal T_{E} with respect to the focusing position is maintained in this manner, loss of servo is less likely to occur at the time of de-focusing caused by eccentricity or deviation from true planarity of the disc 101.

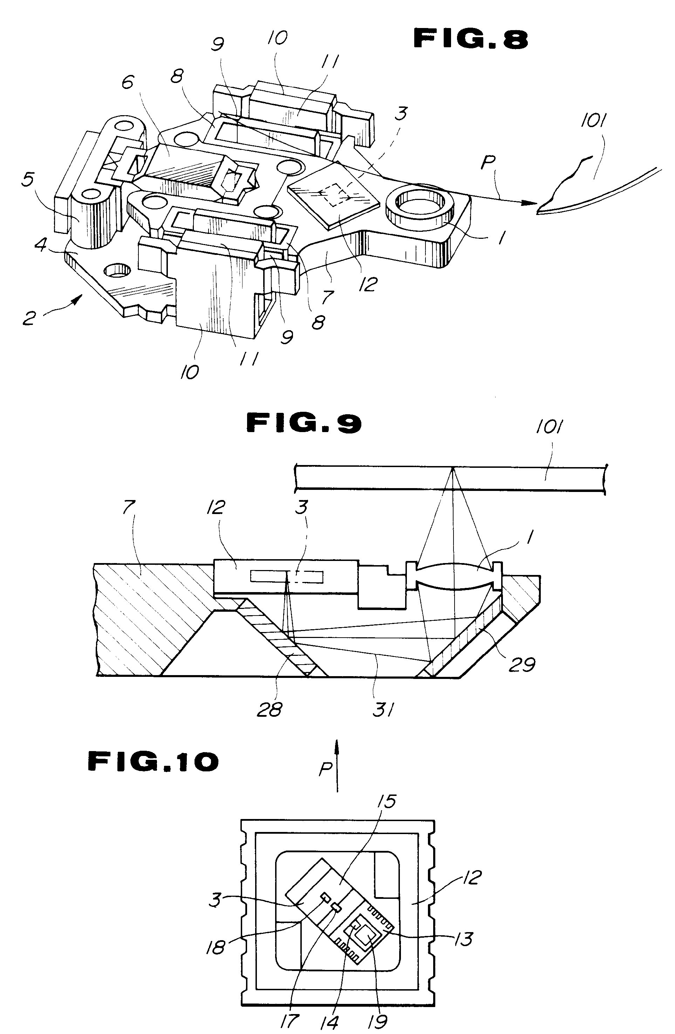

As shown in Figure 8, the package 12 mounting the composite unit 3 may be provided on the lens bobbin 7. In the present embodiment, as shown in Figure 9, a light beam 31 from the laser element 14 is guided by first and second mirrors 28 and 29 mounted on the lens bobbin 7, before being incident on the lens bobbin 7.

In this present embodiment, the composite unit 3 is similarly arranged so that the meridional plane of the light beam is at an angle of approximately 45° with respect to the tangential direction of the recording track t_{R} of the disc 101. Hence, should so-called de-focusing occur, the beam spot formed on the signal recording surface assumes the shape of ellipses having their long axes extending at an angle of approximately 45° with respect to the recording track t_{R}, as indicated in Figure 6. In this manner, the symmetrical relation of the signal levels of the tracking error signal T_{E} and the RF signal may be maintained with respect to the focusing position, as shown in Figure 7.

In the above described embodiments, the composite unit 3 may also be mounted at an angle of approximately 45° with respect to the package 12, as shown in Figure 10. With the use of the thus mounted composite unit 3, should the outer lateral side of the package 12 be positioned on the basis of a reference plane which is selected to be parallel to the tangent of the recording track t_{R}, for example, the meridional plane of the light beam from the composite unit 3 may be set at a predetermined angle with respect to the tangential line to facilitate the assembling operation.

In the above described embodiments, the angle between the meridional plane and the tangential line to the recording track t_{R} is not limited to 45°. For example, it may be in the range of from 30° to 60° to maintain sufficient symmetry of the signal levels of the tracking error signal T_{E} and the RF signal with respect to the focusing position.

The photosensor may also be constituted by only one detector 17. In this case, the first adder 20 and the second adder 22 in the circuit for generating the error signals T_{E} and F_{E} shown in Figures 5A and 5B may be dispensed with, and the output of the first light receiving element 17a be supplied to an inverting input terminal of the first subtractor 21, while the output of the third light receiving element 17c is supplied to a non-inverting input terminal of the first subtractor 21. The output signal of the first subtractor 21 represents the tracking error signal T_{E}. Also the third subtractor 25, the fourth adder 26 and the fourth subtractor 27 may be dispensed with and the output signal of the second subtractor 24 represents the focusing error signal F_{E}.

The present invention is not limited to an optical pick-up device provided with a light emitting/receiving composite unit, but may also be applied to an optical pick-up device in which the semiconductor laser unit and the photodetectors are provided separately in a frame of an optical system. In addition, if the detector construction is of the type having an inoperative central zone, the photodetectors may be divided into two parts, instead of three parts.

In embodiments of the present invention, the meridional plane of the light beam is at a certain predetermined angle with respect to a tangential line drawn to a given recording track on the optical disc, so that non-symmetries of the beam spot on the disc on both sides of the tangential line may be compensated. Also the light beam is free from the coma aberration otherwise caused by using an aberration correcting plate formed by a plane parallel plate.

Thus, in cases wherein the light beam emitted by the semiconductor laser unit is subject to astigmatism, the reflected light from the recording track does not differ in intensity depending on the de-focusing direction, despite the fact that each of the photodetectors for producing the tracking error signal has an inoperative central zone.

Thus a gain waveguide type laser element can be employed to reduce the size of the device, and the effects due to the astigmatic difference can be corrected sufficiently to improve the characteristics associated with de-focusing.

## Claims

1. An optical pick-up device for a recording and/or reproducing apparatus for an optical disc (101) wherein:
a light beam (31) emitted by a semiconductor laser element (14) is converged by an objective lens (1) so as to be irradiated on said optical disc (101) having a plurality of tracks (t_{R}) on which data signals are previously recorded, the reflected light from said optical disc (101) being detected for reading and/or recording the data signals;
the optical pick-up device comprises photodetector means (17, 18) arranged to receive said reflected light to produce tracking error signals (T_{E}); and
said semiconductor laser element is provided in such a manner that said light beam (31) is projected on said disc (101) so that the meridional plane of said light beam (31) extending orthogonal to the junction plane of semiconductor layers of the semiconductor laser element (14) is at such an angle with respect to a tangential line drawn to the recording tracks (t_{R}) that non-symmetries on both sides of said tangential line as a function of the de-focusing direction of the beam spot on said disc (101) are compensated;
characterised in that said photodetector means (17, 18) has a central zone inoperative for tracking (17b, 18b) having a width which is 10 to 40% of the radius of said light beam (31) incident on said photodetector means (17, 18).

2. A device according to claim 1 wherein said photodetector means (17, 18) includes at least a pair of light receiving elements (17a, 17c, 18a, 18c) arranged on opposite sides of said inoperative central zone (17b, 18b).

3. A device according to claim 2 wherein said inoperative central zone (17b, 18b) is approximately parallel to the direction of said tangential line to said recording track (t_{R}).

4. A device according to claim 2 wherein said inoperative central zone (17b, 18b) is inclined at an angle of 30° to 60° relative to the direction of said tangential line to said recording track (t_{R}).

5. A device according to claim 1 wherein said meridional plane makes an angle of 30° to 60° relative to said tangential line to said recording tracks (t_{R}).

6. A device according to claim 5 wherein said semiconductor laser element (14) is mounted on a semiconductor substrate (13) on which a beam splitter prism (15) is secured and which is provided with said photodetector means (17, 18) in the region provided with said beam splitter prism (15).

## Patentansprüche

1. Optische Abtastvorrichtung für ein Aufzeichnungs- und/oder Wiedergabegerät für eine optische Platte (101) worin :
ein durch ein Halbleiterlaserelement (14) emittierter Lichtstrahl (31) durch eine Objektivlinse (1) gebündelt wird, um auf die optische Platte (101) mit einer Vielzahl von Spuren (t_{R}) gestrahlt zu werden, auf denen Datensignale im Vorraus aufgezeichnet sind, wobei das von der optischen Platte (101) reflektierte Licht zum Lesen und/oder Aufzeichnen der Datensignale detektiert wird;
die optische Aufnahmevorrichtung Fotodetektormittel (17,18) aufweist, die derart angeordnet sind um das reflektierte Licht zu empfangen und Spurfehlersignale (T_{E}) zu empfangen; und das Halbleiterlaserelement derart bereitgestellt wird, daß der Lichtstrahl (31) auf die Platte (101) projiziert wird, so daß die meridionale Ebene des besagten Lichtstrahls (31), die sich senkrecht zu der Anschlußebene der Halbleiterschichten des Halbleiterlaserelementes (14) erstreckt, bzgl. einer an die Aufzeichnungsspuren (t_{R}) angelegten tangentialen Linie einen solchen Winkel bildet, daß Nichtsymmetrien auf beiden Seiten der tangentialen Linie als eine Funktion der Defokussierungsrichtung des Lichtfleckes auf der Platte (101) kompensiert werden;
**dadurch gekennzeichnet**, daß die
Fotodetektormittel (17,18) einen zur Spurverfolgung nicht betriebsfähigen Bereich (17b, 18b) mit einer Breite aufweisen, die 10 - 40 % des Radius des auf die Fotodetektormittel (17,18) einfallenden Lichtstrahls (31) beträgt.

2. Vorrichtung nach Anspruch 1, worin die Fotodetektormittel (17,18) zumindest ein Paar von lichtempfangenden Elementen (17a, 17c, 18a, 18c) enthalten, die auf gegenüberliegenden Seiten des besagten zentralen nicht betriebsfähigen Bereiches (17b, 18b) angeordnet sind.

3. Vorrichtung nach Anspruch 2, worin der zentrale nicht betriebsfähige Bereich (17b, 18b) annähernd parallel ist zu der Richtung der besagten zu der Aufzeichnungsspur (t_{R}) tangentialen Linie.

4. Vorrichtung nach Anspruch 2, worin der zentrale nicht betriebsfähige Bereich (17b, 18b) relativ zu der Richtung der besagten zu der Aufzeichnungsspur (t_{R}) tangentialen Linie in einem Winkel von 30° bis 60° geneigt ist.

5. Vorrichtung nach Anspruch 1, worin die meridionale Ebene relativ zu der besagten zu den Aufzeichnungsspuren (t_{R}) tangentialen Linie einen Winkel von 30° bis 60° bildet.

6. Vorrichtung nach Anspruch 5, worin das Halbleiterlaserelement (14) auf einem Halbleitersubstrat (13) angebracht ist, auf dem ein Strahlteilerprisma (15) befestigt ist und das mit den Fotodetektormitteln (17,18), in dem Bereich, der für das Strahlteilerprisma (15) vorgesehen ist, ausgestattet ist.

## Revendications

1. Tête de lecture optique pour un appareil d'enregistrement et/ou de reproduction pour un disque optique (101), dans laquelle :
un faisceau de lumière (31) émis par un élément laser à semi-conducteur (14) est concentré par une lentille objectif (1) de façon à être projeté sur ledit disque optique (101) comportant un certain nombre de pistes (t_{R}) sur lesquelles des signaux de données sont enregistrés préalablement, la lumière réfléchie par ledit disque optique (101) étant détectée pour lecture et/ou enregistrement des signaux de données ;
la tête de lecture optique comprend un moyen photodétecteur (17, 18) disposé pour recevoir ladite lumière réfléchie pour produire des signaux d'erreur de suivi de piste (T_{E}) ; et
ledit élément laser à semi-conducteur est disposé de telle manière que ledit faisceau de lumière (31) est projeté sur ledit disque (101) de sorte que le plan méridien dudit faisceau de lumière (31) s'étendant orthogonalement au plan de jonction des couches semiconductrices de l'élément laser à semi-conducteur (14) se trouve à un angle tel, par rapport à une ligne tracée tangentiellement aux pistes d'enregistrement (t_{R}), que des dissymétries des deux côtés de ladite ligne tangentielle, fonctions du sens de défocalisation du point lumineux de faisceau sur le disque (101), soient compensées ;
caractérisée en ce que ledit moyen photodétecteur (17, 18) comporte une zone centrale (17b, 18b) inopérante pour le suivi de piste ayant une largeur qui est de 10 à 40 % du rayon dudit faisceau de lumière (31) incident sur ledit moyen photodétecteur (17, 18).

2. Tête de lecture selon la revendication 1, dans laquelle ledit moyen photodétecteur (17, 18) comprend au moins une paire d'éléments récepteurs de lumière (17a, 17c, 18a, 18c) disposés de chaque côté de ladite zone centrale inopérante (17b, 18b).

3. Tête de lecture selon la revendication 2, dans laquelle ladite zone centrale inopérante (17b, 18b) est approximativement parallèle à la direction de ladite ligne tangentielle à ladite piste d'enregistrement (t_{R}).

4. Tête de lecture selon la revendication 2, dans laquelle ladite zone centrale inopérante (17b, 18b) est inclinée à un angle de 30° à 60° par rapport à la direction de ladite ligne tangentielle à ladite piste d'enregistrement (t_{R}).

5. Tête de lecture selon la revendication 1, dans laquelle ledit plan méridien fait un angle de 30° à 60° par rapport à ladite ligne tangentielle auxdites pistes d'enregistrement (t_{R}).

6. Tête de lecture selon la revendication 5, dans laquelle ledit élément laser à semi-conducteur (14) est monté sur un substrat semi-conducteur (13) sur lequel un prisme diviseur de faisceau (15) est fixé et qui est pourvu dudit moyen photodétecteur (17, 18) dans la région équipée dudit prisme diviseur de faisceau (15).
